# FASCICULE DE BREVET EUROPEEN

(11) **EP 3 633 236 B1**
(45) Date de publication et mention de la délivrance du brevet: **14.07.2021**
(21) Numéro de dépôt: 19200676.5
(22) Date de dépôt: 01.10.2019
(51) Int. Cl.: F16H 57/02, B62D 5/00, B62D 5/04, F16H 57/021

(54) **CARTER DE RÉDUCTEUR DE DIRECTION ASSISTÉE COMPRENANT UNE ENCOCHE SUR UN CÔTÉ D'UN PERÇAGE INTERMÉDIAIRE**
GETRIEBEGEHÄUSE EINER SERVOLENKUNG, DAS EINEN SCHLITZ AUF EINER SEITE EINER ZWISCHENBOHRUNG UMFASST
POWER-STEERING REDUCTION GEAR HOUSING COMPRISING A NOTCH ON ONE SIDE OF AN INTERMEDIATE DRILLING HOLE

(30) Priorité: 04.10.2018 FR 1859219
(43) Date de publication de la demande: 08.04.2020
(73) Titulaire: JTEKT Europe, 69540 Irigny (FR)
(72) Inventeur: SOHAR, Johann, 69360 Sérézin du Rhône (FR); DURILLON, Arnaud, 69420 LONGES (FR)
(74) Mandataire: Chevalier, Renaud Philippe

(56) Documents cités:
- EP-A1- 0 630 800
- JP-B2- 3 778 845
- US-B1- 6 491 130

## Description

La présente invention concerne un carter de réducteur d'un système de direction assistée de véhicule automobile, ainsi qu'un système de direction équipé d'un tel carter, et un procédé d'usinage de ce carter.

Les véhicules automobiles comportent un volant de manœuvre entraînant une colonne de direction, reliée dans une partie inférieure à un boîtier de direction comprenant une crémaillère s'étendant suivant un axe transversal à un axe d'élongation du véhicule, réalisant un pivotement des roues avant directrices du véhicule.

Les systèmes de direction comportent généralement un dispositif d'assistance délivrant sur la crémaillère une force dépendant de celle donnée par le conducteur, afin de diminuer l'effort demandé au conducteur.

Un type de dispositif d'assistance électrique connu, comporte un moteur électrique relié à un réducteur comprenant une vis sans fin entraînant une roue dentée fixée sur un arbre lié à un pignon de la crémaillère, pour réaliser une forte réduction donnant un couple élevé.

Pour obtenir une bonne précision de fonctionnement du dispositif d'assistance, le réducteur doit présenter un jeu de fonctionnement réduit. Pour cela la vis sans fin du réducteur est portée par un arbre monté sur deux roulements espacés axialement, fixés dans un même carter réalisé en alliage d'aluminium, afin d'obtenir un montage stable de cet arbre subissant des forces élevées en réaction du couple transmis.

Les deux alésages du carter recevant chacun un roulement doivent présenter des caractéristiques géométriques précises, notamment d'alignement de ces alésages. Un procédé d'usinage connu consiste à utiliser une barre d'alésage portant à une extrémité avant un outil de coupe, qui dans une même opération d'usinage, sans retourner un plateau pivotant du carter, ni débrider le carter du plateau de la machine d'usinage, vient usiner successivement les deux alésages.

Pour cela il est nécessaire de disposer dans le carter d'un perçage axial intermédiaire entre les deux alésages, permettant le passage de l'outil de coupe porté par la barre d'alésage pour passer de l'un à l'autre de ces alésages. On réalise l'usinage d'un premier alésage, puis sans débrider le carter de la machine, on fait coulisser axialement l'outil de coupe dans le perçage intermédiaire pour atteindre le deuxième alésage et l'usiner.

Le document EP 0630800 A1 divulgue un carter de réducteur d'un système de direction assistée comprenant suivant un axe principal un premier et un deuxième alésages usinés éloignés l'un de l'autre, conçus pour recevoir des roulements de guidage de l'arbre, d'un réducteur d'une motorisation d'assistance, et comprenant un perçage axial intermédiaire entre ces alésages, le perçage intermédiaire présentant une section transversale sensiblement circulaire.

Toutefois pour des raisons d'encombrement extérieur autour du système de direction disposé dans le compartiment moteur, recevant de plus en plus d'organes, des constructeurs cherchent à réduire l'encombrement extérieur du carter autour du perçage axial intermédiaire entre les deux alésages.

Cet encombrement réduit donne un perçage axial intermédiaire de section réduite ne permettant plus le passage axial de l'outil de coupe, son diamètre étant inférieur au plus grand diamètre de l'outil de coupe.

On peut alors fixer le carter sur le plateau diviseur pivotant de la machine, permettant de réaliser une division angulaire du pivotement de ce plateau, pour réaliser l'usinage d'un premier alésage disposé face à la tête d'usinage de cette machine, puis faire tourner le plateau de 180° pour retourner le carter en présentant le deuxième alésage face à cette tête afin de réaliser son usinage.

En variante suivant le type de machine d'usinage, on peut faire pivoter le porte-outil suivant un angle de 180° pour le disposer de l'autre côté du carter, face au deuxième alésage.

Cependant pour une production en grande série, ce procédé nécessitant un retournement du plateau diviseur ou du porte-outil, ajoute une dispersion dans l'alignement des deux alésages usinés, ce qui pose des problèmes de détérioration de la qualité de fonctionnement du réducteur.

La présente invention a notamment pour but d'éviter ces inconvénients de la technique antérieure.

Elle propose à cet effet un carter de réducteur d'un système de direction assistée de véhicule automobile, comprenant suivant un axe principal un premier et un deuxième alésages usinés éloignés axialement l'un de l'autre, conçus pour recevoir des roulements de guidage de l'arbre d'un réducteur d'une motorisation d'assistance, et comprenant un perçage axial intermédiaire entre ces alésages, ce carter étant remarquable en ce que le perçage intermédiaire présente une section transversale sensiblement circulaire comprenant une encoche formant sur un côté du perçage intermédiaire une rainure longitudinale qui se prolonge sur toute une longueur de ce perçage intermédiaire.

Un avantage de ce carter est qu'en prévoyant des dimensions de la rainure longitudinale suffisantes, on permet après l'usinage d'un premier alésage avec un outil de coupe fixé sur une barre d'alésage, une avance de l'outil de coupe le long de la rainure pour atteindre la position axiale du deuxième alésage, et l'usiner. De cette manière, l'usinage successif des deux alésages est réalisé sans avoir ni à retourner un plateau du carter, ni à pivoter le porte-outil suivant un angle de 180° pour le disposer de l'autre côté du carter, face au deuxième alésage, ni à débrider le carter ou son support sur la machine d'usinage.

On obtient de manière simple et économique un volume extérieur du carter qui est minimum, et en l'absence de débridage ou de retournement, un temps d'usinage réduit et une bonne précision d'alignement des deux alésages.

Le carter de réducteur selon l'invention peut comporter de plus une ou plusieurs des caractéristiques suivantes, qui peuvent être combinées entre elles.

Avantageusement, le rayon de chaque alésage est supérieur au rayon du fond de la rainure.

Avantageusement, le carter comporte une surface extérieure ajustée autour du perçage intermédiaire, formée par une simple paroi de matière entourant ce perçage.

Avantageusement, le perçage intermédiaire et sa rainure sont obtenus directement par un moulage de ce carter de réducteur.

L'invention a aussi pour objet un système de direction comprenant une motorisation électrique entraînant un arbre de direction par l'intermédiaire d'un réducteur, remarquable en ce que ce réducteur comporte un carter de réducteur comprenant l'une quelconque des caractéristiques précédentes.

En particulier, le réducteur peut être un système à roue, et vis sans fin fixée sur un arbre guidé par des roulements maintenus dans les deux alésages du carter de réducteur.

L'invention a de plus pour objet un procédé d'usinage d'un carter de réducteur comprenant l'une quelconque des caractéristiques précédentes avec une machine d'usinage équipée d'une barre d'alésage, remarquable en ce qu'il réalise l'usinage d'un premier alésage, puis sans débrider le carter de la machine il oriente automatiquement l'outil de coupe de la barre d'alésage autour de son axe de rotation pour l'ajuster sur la rainure, puis il coulisse axialement cet outil de coupe dans la rainure pour l'ajuster sur le deuxième alésage et usiner cet alésage.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue d'ensemble d'un système de direction ;
- la figure 2 est une vue d'un carter de réducteur selon l'art antérieur pour ce système de direction ;
- la figure 3 est une vue d'un carter de réducteur selon l'invention pour ce système de direction ;
- la figure 4 est une vue de face du perçage longitudinal de ce carter ; et
- la figure 5 est une vue d'une barre d'alésage équipée d'un outil pour l'usinage des alésages de ce carter.

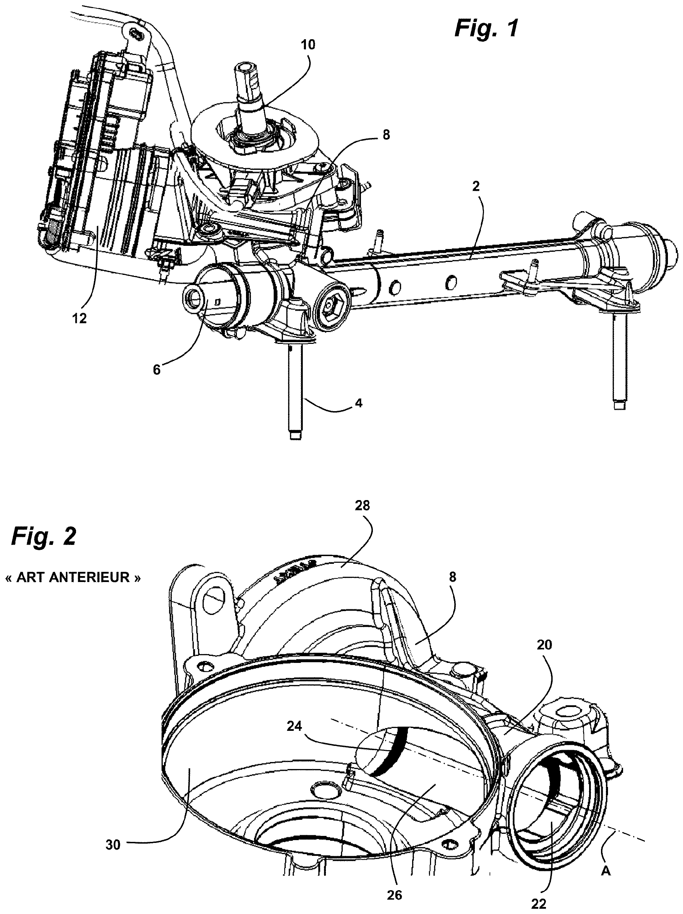

La figure 1 présente un système de direction comprenant un boîtier 2 disposé suivant axe transversal à un axe d'élongation du véhicule, fixé par des vis verticale 4 sur un berceau avant de ce véhicule, comportant une crémaillère coulissante 6 entraînée par un pignon fixé à l'extrémité inférieure d'un arbre de direction 10 commandé par un volant.

Une motorisation électrique 12 entraîne un arbre disposé dans un carter de réducteur 8 fixé sur le boîtier de direction 2, recevant aussi l'arbre de direction 10 pour le guider.

La figure 2 présente le carter de réducteur 8 comportant suivant un axe principal A, un premier alésage 22 et un deuxième alésage 24 axialement espacés, recevant chacun un roulement de guidage de l'arbre du réducteur, et au-delà de ce deuxième alésage une collerette 28 supportant la motorisation électrique 12.

Un perçage axial 26 relie les deux alésages 22, 24 entre eux, présentant un diamètre légèrement inférieur à ces alésages pour permettre le passage d'un outil de coupe d'une barre d'alésage allant de l'un à l'autre sans débrider le carter 8 fixé sur la machine d'usinage.

Le perçage axial 26 débouche sur un grand volume circulaire 30 contenant une roue dentée liée à l'arbre de direction 10, recevant le mouvement d'une vis sans fin disposée sur l'arbre de réducteur, entre ces deux roulements.

Dans cet exemple le diamètre intérieur du perçage axial 26 est de 27mm minimum, permettant un passage axial d'une barre d'alésage équipée à son extrémité d'un outil de coupe dépassant radialement, qui peut présenter une orientation quelconque autour de l'axe principal A. Le plus grand diamètre de l'outil de coupe étant un peu inférieur à 27mm, on permet son passage à l'intérieur.

Le contour extérieur cylindrique 20 de la partie du carter 8 contenant le perçage axial 26, présente un diamètre minimum d'environ 33mm pour obtenir une épaisseur de matière suffisante de cette partie. Dans certains cas ce diamètre extérieur minimum pose des problèmes de proximité avec d'autres composants.

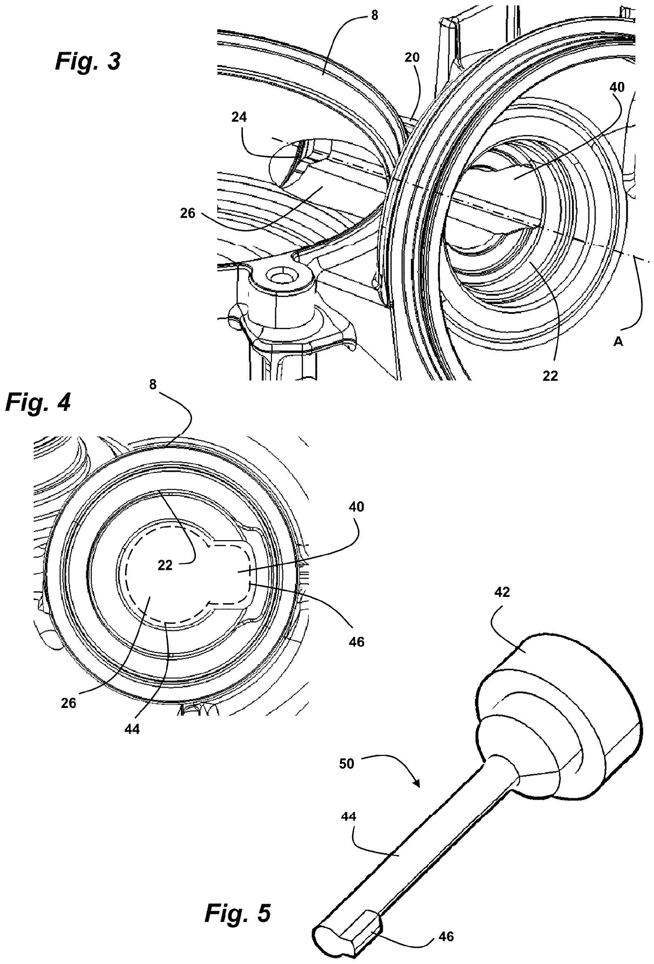

Les figures 3, 4 et 5 présentent un carter de réducteur similaire 8, comprenant un perçage axial 26 de diamètre réduit, égale à 17,4 mm, ce qui permet de l'inclure dans un contour extérieur cylindrique 20 de ce carter présentant un diamètre minimum d'environ 23mm, qui suit le contour intérieur du perçage axial 26 avec une simple paroi de matière interposée. Ce contour extérieur cylindrique 20 comporte une réduction du rayon d'environ 5mm par rapport à celui présenté figure 2.

Un côté du perçage axial 26 comporte une rainure longitudinale 40 présentant dans une direction tangentielle une largeur égale à environ 60% du diamètre de ce perçage, et dans la direction radiale une profondeur présentant un rayon sensiblement équivalent à ceux des alésages 22, 24.

Le contour extérieur 20 du carter 8 autour du perçage axial 26 doit prendre en compte la rainure longitudinale 40 pour la contourner, toutefois l'orientation angulaire de cette rainure peut s'adapter pour la disposer dans une zone où l'espace extérieur est disponible.

Une barre d'alésage 50 pour réaliser l'usinage des alésages 22, 24, comporte une partie arrière 42 de grand diamètre pour la fixation sur la machine d'usinage, et une tige allongée 44 disposant à son extrémité avant d'un outil de coupe 46.

Comme présenté figure 4, le diamètre du perçage axial 26 permet d'insérer dedans la tige 44, l'outil de coupe 46 passant dans la rainure longitudinale 40, avec un jeu minimum pour éviter des contacts.

Le procédé d'usinage des alésages 22, 24 est le suivant. Après l'usinage d'un premier alésage, sans débrider le carter 8 de la machine d'usinage, cette machine oriente automatiquement la barre d'alésage 50 autour de son axe de rotation aligné sur l'axe principal A, pour ajuster l'outil de coupe 46 sur la rainure 40. Ensuite la barre d'alésage 50 coulisse axialement pour disposer l'outil de coupe 46 au niveau du deuxième alésage, puis l'usine avec un rayon supérieur à celui du fond de cette rainure.

Avantageusement le perçage axial 26 et sa rainure 40 sont réalisés de manière économique directement par le moulage du carter 8 en alliage d'aluminium, ce qui n'ajoute pas de coût pour cette réalisation.

On obtient avec un temps de cycle d'usinage court la meilleure précision possible pour l'alignement des alésages 22, 24, en assurant la qualité de fonctionnement du réducteur pour un coût minimum.

## Revendications

1. Carter de réducteur (8) d'un système de direction assistée de véhicule automobile, comprenant suivant un axe principal (A) un premier (22) et un deuxième (24) alésages usinés éloignés axialement l'un de l'autre, conçus pour recevoir des roulements de guidage de l'arbre d'un réducteur d'une motorisation d'assistance, et comprenant un perçage axial intermédiaire (26) entre ces alésages (22, 24), le perçage intermédiaire (26) présentant une section transversale sensiblement circulaire, **caractérisé en ce que** la section transversale sensiblement circulaire comprend une encoche formant sur un côté de ce perçage intermédiaire (26) une rainure longitudinale (40) qui se prolonge sur toute une longueur de ce perçage intermédiaire (26).

2. Carter de réducteur suivant la revendication 1, **caractérisé en ce que** le rayon de chaque alésage (22, 24) est supérieur au rayon du fond de la rainure (40).

3. Carter de réducteur suivant la revendication 1 ou 2, **caractérisé en ce qu'**il comporte une surface extérieure (20) ajustée autour du perçage intermédiaire (26), formée par une simple paroi de matière entourant ce perçage (26).

4. Carter de réducteur selon l'une quelconque des revendications précédentes, **caractérisé en ce que** le perçage intermédiaire (26) et sa rainure (40) sont obtenus directement par un moulage de ce carter de réducteur (8).

5. Système de direction comprenant une motorisation électrique (12) entraînant un arbre de direction (10) par l'intermédiaire d'un réducteur, **caractérisé en ce que** ce réducteur comporte un carter de réducteur (8) selon l'une quelconque des revendications précédentes.

6. Système de direction selon la revendication 5, **caractérisé en ce que** le réducteur est un système à roue, et vis sans fin fixée sur un arbre guidé par des roulements maintenus dans les deux alésages (22, 24) du carter de réducteur (8).

7. Procédé d'usinage d'un carter de réducteur (8) selon l'une quelconque des revendications 1 à 4, avec une machine d'usinage équipée d'une barre d'alésage (50), **caractérisé en ce qu'**il réalise l'usinage d'un premier alésage (22, 24), puis sans débrider le carter (8) de la machine il oriente automatiquement l'outil de coupe (46) de la barre d'alésage (50) autour de son axe de rotation pour l'ajuster sur la rainure (40), puis il coulisse axialement cet outil de coupe (46) dans la rainure pour l'ajuster sur le deuxième alésage et usiner cet alésage.

## Patentansprüche

1. Getriebegehäuse (8) eines Servolenkungssystems eines Kraftfahrzeugs, umfassend gemäß einer Hauptachse (A) eine erste (22) und eine zweite (24) axial voneinander entfernt angefertigte Bohrung, die konstruiert sind, um Führungslager der Welle eines Getriebes einer Hilfsmotorisierung aufzunehmen, und umfassend einen axialen Zwischendurchbruch (26) zwischen diesen Bohrungen (22, 24), wobei der Zwischendurchbruch (26) einen etwa kreisförmigen transversalen Querschnitt aufweist, **dadurch gekennzeichnet, dass** der etwa kreisförmige transversale Querschnitt einen Schlitz umfasst, der auf einer Seite dieses Zwischendurchbruchs (26) eine Längsrille (40) bildet, die sich über eine gesamte Länge dieses Zwischendurchbruchs (26) fortsetzt.

2. Getriebegehäuse nach Anspruch 1, **dadurch gekennzeichnet, dass** der Radius jeder Bohrung (22, 24) größer als der Radius des Bodens der Rille (40) ist.

3. Getriebegehäuse nach Anspruch 1 oder 2, **dadurch gekennzeichnet, dass** es eine um den Zwischendurchbruch (26) angepasste äußere Oberfläche (20) aufweist, die von einer einfachen Materialwand gebildet ist, die diesen Durchbruch (26) umgibt.

4. Getriebegehäuse nach einem der vorangehenden Ansprüche, **dadurch gekennzeichnet, dass** der Zwischendurchbruch (26) und dessen Rille (40) direkt durch ein Formen dieses Getriebegehäuses (8) erhalten werden.

5. Lenkungssystem, umfassend eine elektrische Motorisierung (12), die eine Lenkungswelle (10) über ein Getriebe antreibt, **dadurch gekennzeichnet, dass** dieses Getriebe ein Getriebegehäuse (8) nach einem der vorangehenden Ansprüche aufweist.

6. Lenkungssystem nach Anspruch 5, **dadurch gekennzeichnet, dass** das Getriebe ein Radsystem und Schnecke ist, die auf einer Welle befestigt ist, die von Lagern geführt wird, die in den zwei Bohrungen (22, 24) des Getriebegehäuses (8) gehalten werden.

7. Verfahren zum Bearbeiten eines Getriebegehäuses (8) nach einem der Ansprüche 1 bis 4 mit einer Bearbeitungsmaschine, die mit einer Bohrstange (50) ausgestattet ist, **dadurch gekennzeichnet, dass** die Bearbeitung einer ersten Bohrung (22, 24) durchgeführt wird, dann, ohne das Gehäuse (8) aus der Maschine auszuspannen, das Schneidwerkzeug (46) der Bohrstange (50) automatisch um dessen Rotationsachse orientiert wird, um es an der Rille (40) anzupassen, dann dieses Schneidwerkzeug (46) in die Rille geführt wird, um es an der zweiten Bohrung anzupassen und diese Bohrung herzustellen.

## Claims

1. A reducer casing (8) of a motor vehicle power steering system, comprising, along a main axis (A), first (22) and second (24) machined bores which are axially spaced apart from each other, designed to receive guide bearings of the shaft of a reducer of an assist motorization, and comprising an intermediate axial hole (26) between these bores (22, 24), the intermediate hole (26) having a substantially circular cross-section, **characterized in that** the substantially circular cross-section comprises a notch forming on one side of this intermediate hole (26) a longitudinal groove (40) which extend along an entire length of this intermediate hole (26).

2. The reducer casing according to claim 1, **characterized in that** the radius of each bore (22, 24) is greater than the radius of the bottom of the groove (40).

3. The reducer casing according to claim 1 or 2, **characterized in that** it includes an outer surface (20) which is fitted around the intermediate hole (26), formed by a single wall of material surrounding this hole (26).

4. The reducer casing according to any one of the preceding claims, **characterized in that** the intermediate hole (26) and the groove (40) thereof are obtained directly by a molding of this reducer casing (8).

5. A steering system comprising an electric motorization (12) driving a steering shaft (10) via a reducer, **characterized in that** this reducer includes a reducer casing (8) according to any one of the preceding claims.

6. The steering system according to claim 5, **characterized in that** the reducer is a wheel system, and a worm screw fastened on a shaft which is guided by bearings held in the two bores (22, 24) of the reducer casing (8).

7. A method for machining a reducer casing (8) according to any one of claims 1 to 4, with a machining machine which is equipped with a boring bar (50), **characterized in that** it carries out the machining of a first bore (22, 24), then without unclamping the casing (8) from the machine it automatically orients the cutting tool (46) of the boring bar (50) about the axis of rotation thereof to fit it on the groove (40), then it axially slides this cutting tool (46) in the groove to fit it on the second bore and machine this bore.
